# EUROPÄISCHE PATENTANMELDUNG

(11) **EP 4 008 432 A2**
(43) Veröffentlichungstag der Anmeldung: **08.06.2022**
(21) Anmeldenummer: 21207791.1
(22) Anmeldetag: 11.11.2021
(51) Int. Cl.: B01J 35/00, B29B 9/04, B29B 9/12, B29B 17/00, B29B 17/04

(54) **LINOLEUM-GRANULAT FÜR DEN AUSSENBEREICH**

(30) Priorität: 13.11.2020 DE 102020130071; 13.11.2020 DE 202020106542 U; 03.09.2021 DE 102021122895
(71) Anmelder: Pigmentsolution GmbH, 4844 Regau (AT)
(72) Erfinder: Höglinger, Gerald, 4840 Vöcklabruck (AT); Kröger, Andreas, 48712 Gescher (DE)
(74) Vertreter: Diehl & Partner

(57) **Zusammenfassung**

Die Erfindung schlägt ein Linoleum-Granulat mit photokatalytischem Titandioxid oder Zinkoxid für den Einsatz in Außenbereichen vor. Ferner schlägt die Erfindung einen Außenanlagen-Bodenbelag mit einem oder aus einem Linoleum-Granulat vor.

## Beschreibung

Die vorliegende Erfindung betrifft den Außen-Einsatz von Linoleum sowie ein für diese Verwendung hergerichtetes Linoleum-Granulat. Die Erfindung betrifft auch einen Außenanlagen-Bodenbelag mit oder aus dem Linoleum.

Linoleum mit flammhemmenden Zusätzen ist aus EP 1 585 785 B1 und EP 1 386 033 B1) bekannt. Dieses bekannte Linoleum ist naturgemäß für den Innenbereich konzipiert, und zwar zum Abdecken von Oberflächen; es handelt sich also vorwiegend um ein Schichtmaterial.

Andererseits sind für Außenanlagen Bodenbeläge auf der Basis von granuliertem Kork bekannt. Dieses wird, um nicht durch Wettereinflüsse verschwemmt oder verweht zu werden, in Kunststoff gekapselt (DE 24 57 345 A1 und WO 2020/120799 A1).

Der Erfinder hat nun unter einem ersten Aspekt gefunden, dass sich Linoleum in granulierter Form mit einem photokatalytischen Zusatz aus TiO₂, SnO₂ und/oder ZnO gemäß Anspruch 1 sehr gut im Außeneinsatz eignet, um Grünanlagen, Sportplätze und dergleichen zu bedecken.

Unter einem zweiten Aspekt schlägt die Erfindung einen Außenanlagen-Bodenbelag gemäß Anspruch 15 aus oder mit dem granulierten Linoleum, insbesondere auch ohne photokatalytisch wirkendes TiO₂, SnO₂ und/oder ZnO vor.

Unter einem weiteren Aspekt ist es gemäß Anspruch 10 oder 11 auch erfindungsgemäß, das Linoleumgranulat als Bodendecker für Außenanlagen zu verwenden, insbesondere auf Sportanlagen, Kunstrasen, Naturrasen, Gehwegen, Parkanlagen, Blumenbeeten und Gartenanlagen.

Das verwendete Linoleumgranulat kann aus bereitgestelltem Schichtmaterial, z.B. Restmaterialien, Verschnitt oder Abfällen eines Schichtmaterials, durch Schreddern auf eine Größe von 1 mm bis 4 cm, insbesondere 2 mm bis 4 cm oder 2 mm bis 2 cm oder bis 1 cm (jeweils als Massen-Median), ohne Zusatz von photokatalytischem TiO₂, SnO₂ und/oder ZnO erhalten werden.

Weiterbildungen beinhalten die Möglichkeit, das Granulat durch anorganische Pigmente einzufärben, was besonders bei Sportplätzen vorteilhaft ist. Dazu kann es erwünscht sein, jegliche nicht-abbaubaren Zusätze (es ist der biologische Abbau gemeint) zu vermeiden und den Abbau der organischen Teile ggf. durch diesbezüglich wirksame Zuschlagstoffe zu beschleunigen.

Photokatalytisches Titandioxid ist an sich aus EP 2 235 118 A1, EP 2 726 557 A1 und EP 3 351 515 A1 als Suspension zur Beschichtung von Oberflächen bekannt, jedoch, anders als herkömmliches TiO2-Weißpigment, nicht als Zuschlagstoff für Linoleum.

Demgemäß kann eine Verwendung des granulierten Linoleums seinen Einsatz als Streugranulat im Außenbereich mit dem photokatalytischen TiO₂ (bzw. SnO₂ und/oder ZnO) oder ohne dieses (bzw. eines, zwei, oder alle davon) beinhalten.

Es ist im ersteren Fall für die Abbau-Eigenschaften vorteilhaft, wenn das photokatalytische Titandioxid ganz oder überwiegend aus der Anatas-Modifikation besteht und/oder eine spezifische Oberfläche von über 50 m²/g aufweist und/oder dotiert ist. Der Gewichtsanteil des photokatalytischen Titandioxids wird so gewählt, dass die gewünschte mittlere Abbauzeit erreicht wird, und die kann z.B. 2 bis 5 Jahre betragen (bei einem Gehalt von 0,1 % bis 7 %, insbesondere 0,5 % bis 3,5 % photokatalytischem Titandioxid).

Das Linoleum-Granulat weist vorzugsweise eine Median-Korngröße von 1 mm bis 4 cm, insbesondere von 2 mm bis 4 cm oder von 2 mm bis 2 cm oder bis 1 cm auf (jeweils als Massen-Median zu verstehen).

Ohne sich dadurch beschränken zu wollen, wird angenommen, dass das im Linoleum als Hauptbestandteil enthaltene Leinöl bakterizid wirkt und dadurch einer Vermoosung und ebenso einem Unkrautbewuchs entgegenwirkt. Dennoch bleibt das Linoleum-Granulat biologisch abbaubar.

Die mittlere Abbauzeit lässt sich bei Bedarf durch den Zusatz an TiO₂ beschleunigen und steuern. Es kann vermutet werden, dass dafür die allmähliche Oxidation des Leinöls an der Luft verantwortlich ist.

Die Zugabe von photokatalytischem Titandioxid kann in Pulverform oder als wässrige Suspension vor, bei, oder nach dem Schreddern des eingesetzten Schichtmaterials erfolgen. Das hierbei verwendete photokatalytische Titandioxid kann als PS-Photonox^{®} von der Anmelderin bezogen werden.

Andererseits kann das Linoleum-Granulat einen oder mehrere andere photokatalytisch aktive Zusätze enthalten, wie dotiertes ZnO und dotiertes SnO₂, wobei das Dotierelement insbesondere ausgewählt ist aus Co, H, C, N, P und S, wobei Co bevorzugt ist. Diese Zusätze wirken im Ergebnis ähnlich wie PS-Photonox^{®}.

Die übrigen, an sich z.B. aus EP 1 585 785 B1 bekannten Bestandteile des Ausgangs-Linoleums sind nicht alle unbedingt erforderlich; insbesondere sind für das Granulat keine Jutefasern wie beim traditionellen Linoleum-Schichtmaterial zwingend nötig. Insofern der Ausgangsstoff aus einem Recycling-Vorgang stammt, werden jene aber von vornherein vorhanden sein, und es ist nicht erforderlich, sie zu entfernen.

Typische Inhaltsstoffe von Linoleum sind: Leinöl (oxidativ polymerisiert) etwa 32 Gew.-%, Naturharze (z.B. Kolophonium) etwa 8 Gew.-%, organische Füllstoffe (z.B. Holz- oder Korkmehl) etwa 40 Gew.-%, anorganische Füllstoffe (z.B. Kalksteinpulver) etwa 20 Gew.-%, ggf. Trägermaterial (Jutefasern oder -gewebe) etwa 1 Gew.-%.

Aus der erfindungsgemäßen Verwendung im Außenbereich ergibt sich, dass es vorteilhaft ist, auf nicht-abbaubare, insbesondere Chlor-organische Inhaltstoffe zu verzichten. Für anorganische Pigmente gilt dieser Vorbehalt weniger, insoweit sich diese (also z.B. Kalk, Kalkstein oder auch TiO₂-Weißpigment) umweltneutral verhalten. Ein Gehalt an Aluminiumhydroxid ist, weil unnötig, nicht vorgesehen.

## Patentansprüche

1. Linoleum-Granulat mit photokatalytischem Titandioxid, Zinnoxid oder Zinkoxid.

2. Linoleum-Granulat nach Anspruch 1, wobei das photokatalytische Titandioxid ganz oder überwiegend aus der Anatas-Modifikation besteht.

3. Linoleum-Granulat nach Anspruch 1 oder 2, wobei das photokatalytische Titandioxid eine spezifische Oberfläche von über 50 m²/g aufweist.

4. Linoleum-Granulat nach einem der vorstehenden Ansprüche, wobei das photokatalytische Titandioxid dotiert ist.

5. Linoleum-Granulat nach einem der vorstehenden Ansprüche, wobei der Gewichtsanteil an photokatalytischem Titandioxid 0,1 % bis 7 % beträgt.

6. Linoleum-Granulat nach einem der vorstehenden Ansprüche, wobei das Linoleum-Granulat eine Median-Korngröße von 1 mm bis 4 cm, insbesondere von 2 mm bis 4 cm oder von 2 mm bis 2 cm oder bis 1 cm aufweist.

7. Linoleum-Granulat nach einem der vorstehenden Ansprüche, wobei das Linoleum-Granulat weitgehend frei ist von chlororganischen Verbindungen.

8. Linoleum Granulat, erhältlich oder erhalten durch Schreddern von Linoleum-Schichtmaterial unter Zusatz von photokatalytischem Titandioxid vor, bei, oder nach dem Schreddern, wobei das photokatalytische Titandioxid insbesondere beim Zusetzen in Pulverform oder als wässrige Suspension vorliegt.

9. Linoleum-Granulat nach einem der vorstehenden Ansprüche, wobei das Linoleum-Granulat mit anorganischen Pigmenten eingefärbt ist.

10. Verwendung des Linoleum-Granulats nach einem der vorstehenden Ansprüche als Bodendecker im Außenbereich.

11. Verwendung eines Linoleum-Granulats ohne Zusatz von photokatalytischem Titandioxid, Zinnoxid und/oder Zinkoxid als Bodendecker im Außenbereich.

12. Verwendung eines Linoleum-Granulats nach Anspruch 11, wobei das Linoleum-Granulat eine Median-Korngröße von 1 mm bis 4 cm, insbesondere von 2 mm bis 4 cm oder von 2 mm bis 2 cm oder bis 1 cm aufweist.

13. Verwendung eines Linoleum-Granulats nach Anspruch 11 oder 12, wobei das Linoleum-Granulat weitgehend oder gänzlich frei ist von chlororganischen Verbindungen.

14. Verwendung eines Linoleum-Granulats nach einem der Ansprüche 10 bis 13 als Streugranulat auf Sportanlagen, Kunstrasen, Naturrasen, Gehwegen, Parkanlagen, Blumenbeeten oder in Gartenanlagen.

15. Außenanlagen-Bodenbelag mit dem oder aus dem Linoleum-Granulat nach einem der Ansprüche 1 bis 9.
